**Europäisches Patentamt**

(19) **European Patent Office**

**Office européen des brevets**

(11) Veröffentlichungsnummer: **0 060 464**
**B1**

(12) # EUROPÄISCHE PATENTSCHRIFT

(45) Veröffentlichungstag der Patentschrift:
**11.09.85**

(51) Int. Cl.⁴: **G 01 P 13/00**

(21) Anmeldenummer: **82101752.2**

(22) Anmeldetag: **05.03.82**

(54) Verfahren zur Aufzeichnung von örtlichen Grenzschicht-Stromlinienrichtungen in flüssigen Medien.

(30) Priorität: **17.03.81 DE 3110325**

(43) Veröffentlichungstag der Anmeldung:
**22.09.82 Patentblatt 82/38**

(45) Bekanntmachung des Hinweises auf die Patenterteilung:
**11.09.85 Patentblatt 85/37**

(84) Benannte Vertragsstaaten:
**AT CH DE FR GB LI NL SE**

(56) Entgegenhaltungen:
**EP - A - 0 017 752**
**EP - A - 0 035 207**
**DE - A - 2 928 690**
**DE - B - 2 133 834**
**DE - B - 2 133 835**
**DE - B - 2 133 865**
**US - A - 3 301 046**

(73) Patentinhaber: **Siemens Aktiengesellschaft, Berlin und München Wittelsbacherplatz 2, D-8000 München 2 (DE)**

(72) Erfinder: **Opitz, Heinrich, Dipl.-Chem., Breslauer Strasse 1, D-8520 Erlangen (DE)**
Erfinder: **Urban, Gerd, Stettiner Strasse 22, D-8520 Erlangen (DE)**
Erfinder: **Montag, Bernhard, Nordring 22, D-8550 Forchheim (DE)**

## Beschreibung

Die Erfindung betrifft ein Verfahren zur Aufzeichnung von örtlichen Stromlinienrichtungen in einer Grenzschicht zwischen einem flüssigen, wäßrigen Medium und einer an das Medium angrenzenden Fläche, bei welchem die Fläche mit einem Film beschichtet wird, auf welchem rasterartig kleine Reagenziendepots einer wasserlöslichen Substanz aufgebracht werden, wonach eine inerte, im flüssigen Medium lösliche Schicht aufgebracht wird, welche den Kontakt des flüssigen Mediums mit den Reagenziendepots verzögert, und die so vorbereitete Fläche mit dem wäßrigen Strömungsmedium angeströmt wird.

Die bei allen elektrischen Maschinen und Apparaten auftretende Verlustwärme wirft Kühlprobleme auf. Da die in der Verfahrenstechnik gängigen globalen Berechnungsverfahren für den kühltechnisch relevanten örtlichen Wärmeübergangskoeffizienten meist nicht ausreichend sind, ist man auf eine experimentelle Ermittlung angewiesen. Dieser örtliche konvektive Transportkoeffizient wird durch Zustand und Form der Prandtlschen Strömungsgrenzschicht bestimmt. Diese wird als reibungsbehafteter schichtartiger Bereich zwischen der Kernströmung und der wärmetauschenden Oberfläche so definiert, daß in ihm die Strömungsgeschwindigkeit von 99,9% der Kernströmung auf Null bei unmittelbarer Wandhaftung absinkt.

Die Eigenschaften der Grenzschicht wie örtliche Dicke, örtliche Wandschubspannung, örtlicher Stoff- und Wärmeübergangskoeffizient konnten bisher nur in punktweiser Einzelausmessung zeitraubend und mit geringer Ortsauflösung bestimmt werden.

Erst mit den aus den deutschen Patentschriften DE-B-2 133 834, DE-B-2 133 835, DE-B-2 133 865 und der DE-A-2 928 690 angeführten Verfahren ist es bekannt, ein ganzes Feld von örtlichen Transportkoeffizienten mit hoher Ortsauflösung in einer einzigen Messung zu erfassen, wodurch eine rationelle Strömungs-Grenzschichtanalyse möglich ist.

Das Aufzeichnen von Grenzschichtströmungen in Wasser, organischen Medien und Ölen, kann gemäß DE-A-2 928 690 bei Verwendung einer nicht oder nicht vollständig verdichteten anodisch oxidierten Aluminiumoberfläche, auf die eine wasserlösliche Substanz aufgebracht ist, mit einer farblosen oder gefärbten Flüssigkeit oder mit einer Beschichtung oder Pointillierung mit einer in die Eloxalschicht einlagerbare oder adsorbierbare in Wasser oder organischen Medien löslichen Substanz erfolgen. Auf die Oberflächen der kapillaraktiven Eloxalschicht kann ein adsorbierbarer Farbstoff in Form von Farbstoffpunkten vorzugsweise mit Hilfe der Siebdrucktechnik deponiert sein. Von jedem von der Grenzschichtströmung erfaßten Farbstoffpunkt geht ein Farbschweif aus, der sich in die Eloxalschicht chemigraphisch einschreibt und damit den lokalen Verlauf der Grenzschichtströmung aufzeichnet und sichtbar macht.

Das aus der DE-B-2 133 834 bekannte Naßfilm-Diffusionsverfahren (NFD) ist aufgrund der bekannten Analogie zwischen Stoff- und Wärmeübergang zur flächenmäßigen Darstellung der örtlichen Wärmeübertragungskoeffizienten besonders geeignet. Es war aber bisher, von Sonderfällen abgesehen, noch nicht möglich, in flüssigen Medien die örtliche Grenzschichtströmung nach Richtung und Betrag aus einem Naßfilm-Photogramm des NFD-Verfahrens abzuleiten, ohne die Kernströmung wesentlich zu stören. Fig. 1 der DE-G-2 133 834 zeigt eine mit Hilfe des Naßfilmdiffusionsverfahrens sichtbar gemachte Grenzschichtdarstellung der Wärmedurchtrittsfläche einer stationär strömenden Kühlzelle. Kühlmittelein- und -auslaß sind durch Pfeile gekennzeichnet. Eine eindeutige Information über die flächenmäßige Verteilung der örtlichen Strömungsrichtung des Kühlmediums kann der Aufzeichnung nicht entnommen werden.

Bei Optimierungsaufgabe spezieller Wärmeübergangsprobleme, bei welchen die Kenntnis des oft verwickelten Strömungsverlaufs an der wärmetauschenden Fläche nach Richtung und Betrag unerläßlich ist, sind die erforderlichen Daten entweder in mühevollen Sondenmessungen oder in aufwendigen Rechnungen zu ermitteln. Es mußten zur Darstellung der örtlichen Strömungsrichtung von Strömungsgrenzschichten an den interessierenden beströmten Wänden durch feine Bohrungen Farbstofflösungen injiziert werden.

Aufgabe der Erfindung ist es daher, ein Verfahren für flüssige Medien zu entwickeln, welches die Aufzeichnung der örtlichen zweidimensionalen Strömungsrichtung von stationären Strömungsgrenzschichten beim Naßfilmdiffusionsverfahren ermöglicht.

Diese Aufgabe wird nach der Erfindung dadurch gelöst, daß der Film ein trockener oder gequollener, fotografischer Planfilm ist, daß die Reagenziendepots ca. 0,2 mm³ Rauminhalt haben und aus einer mit Silberionen reagierenden Substanz bestehen und daß als letzter Verfahrensschritt der Film nach bekannten Verfahren entwickelt wird. Durch das erfindungsgemäße Verfahren wird die Aufzeichnung von örtlichen Grenzschichtstromlinien, ohne eine merkliche Störung der Strömung, erreicht.

Die Zeichnung dient der näheren Erläuterung der Erfindung. Es zeigt

Fig. 1 eine Grenzschichtdarstellung gemäß DE-B-2 133 834.

Fig. 2 zeigt die mit einem chemischen Stromlinien-Indikator sichtbar gemachte Grenzschichtströmung einer waagerecht angeströmten Platte mit einem zylindrischen Störkörper.

Fig. 3, 4 und 5 zeigen die Verteilung der örtlicher Strömungsrichtung von Strömungsgrenzschichten bei gerasteter Anordnung von punktförmigen chemischen Stromlinien-Indikator. In Fig. 3 ist die örtliche Strömungsrichtung der in Fig. 1 zugrunde liegende Wärmedurchtrittsfläche einer Kühlzelle aufgezeichnet.

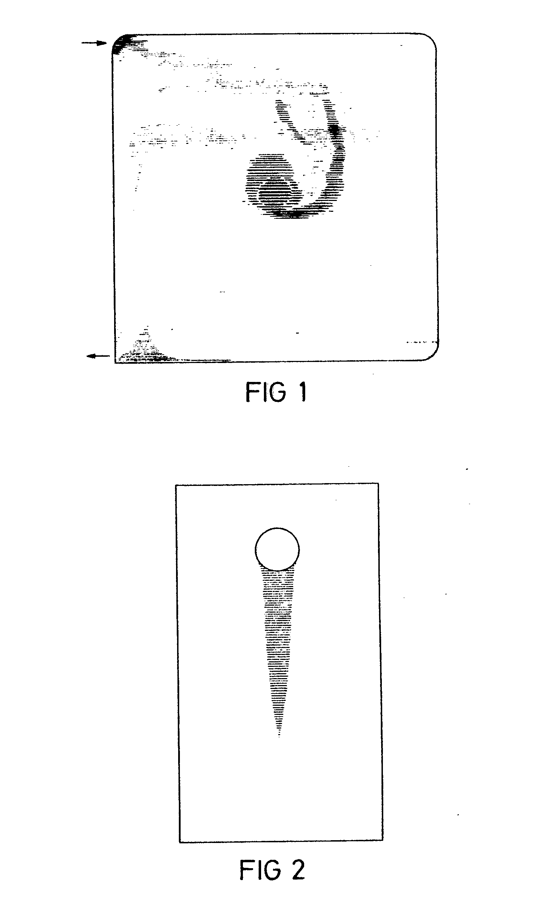

Die Abmessungen der einzelnen Reagenziendepots der gegen Silberionen reaktiven wasserlöslichen Substanz liegen unterhalb der Rauhigkeitsdefinition der Fluiddynamik, wobei vorzugsweise die relative Höhe der Reagenziendepots annähernd der halben Grenzschichtdicke entsprechen soll. Die reaktive Substanz wandelt das im Naßfilm enthaltende helle Halogensilber in ein gut sichtbares Silber- oder Silbersulfidbild um. Die von einem angeströmten Reagenziendepot (im folgenden »Chemischer Stromlinien-Indikator« (CSI) genannt) ausgehende »Agensstromschleppe« schreibt dann ihre Bahn durch chemische Reaktion mit kräftigem Kontrast in die Oberfläche des Naßfilms ein (Fig. 2). Punktförmige CSI mit ca. 1 mm Durchmesser in gerasterter Anordnung ermöglichen die flächenmäßige Erfassung der Verteilung der örtlichen Strömungsrichtung von Strömungsgrenzschichten.

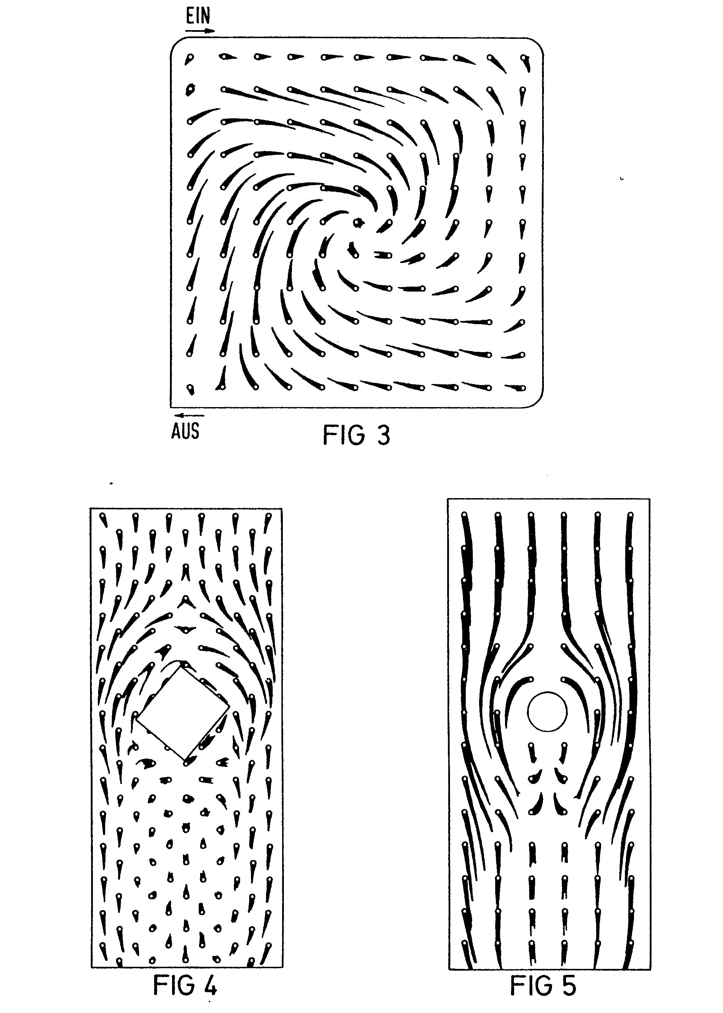

Fig. 3 zeigt die örtliche Strömungsrichtung einer Wärmedurchtrittsfläche einer Kühlzelle. In Bildmitte erkennt man hier aus der Verbreiterung der Wirbelschleppen der CSI die Abnahme der Horizontalkomponente der Strömungsgeschwindigkeit in der Grenzschicht. Die tiefere Schwärzung in Bildmitte bedeutet eine Verringerung des Wärmeübergangs.

Geeignete wasserlösliche, gegen Silberionen reaktive Substanzen »Chemische-Stromlinien-Indikatoren (CSI)« — sind Fällungsmittel für Silberionen, beispielsweise schwefelhaltige Verbindungen, insbesondere schwefelorganische Verbindungen und wasser- und säurelösliche anorganische Sulfide, sowie andererseits Reduktionsmittel für Silberhalogenide, beispielsweise übliche fotografische Entwickler. Sie werden vorzugsweise eingearbeitet in einem pastenbildenden Stoff eingesetzt. Eine gut geeignete Paste kann hergestellt sein durch Vermischen von 20 g Gummiarabikum, 10 g Thioharnstoff und 5 ml Wasser bei Raumtemperatur.

Als Verzögerungsschicht können sowohl Gelatine-Wasser als auch Gummiarabikum-Wassermischungen verwendet werden. Die Verzögerungsschichten sollen die Aufzeichnung von instationären Strömungsanlaufvorkommen vermeiden. Geeignete Deckschichtbildner sind im Strömungsmedium löslich, gegenüber dem Naßfilm chemisch inert und geben die chemisch aktiven CSI-Indikatoren erst bei stationären Strömungsverhältnissen frei. Diese Schicht ist so dimensioniert, daß die Beendigung des Auflösevorganges mit der Einstellung eines stationären Strömungszustandes des Fluids zusammenfällt. Die Dicke der Verzögerungsschicht liegt vorzugsweise bei ca. 50 μm.

Geeignete Deckschichtbildner für die Reagenziendepots bei wäßrigem Fluid sind z. B. Gelatine, Gummiarabikum, Traganth, Polyvinylalkohol oder Methylzellulose.

Das Aufbringen der CS-Indikatoren auf den Naßfilm kann z. B. mittels Siebdrucktechnik oder auch mit einer geeigneten Lochrasterschablone erfolgen. Bei letzterer wird eine noch höhere Genauigkeit erreicht. Diese Technik ermöglicht die Aufzeichnung eines ganzen Feldes von örtlichen Grenzschichtströmungsrichtungen. Man erhält mit solchen CSI-Rasterfilmen sehr eindrucksvolle Felddarstellungen der örtlichen Grenzschicht-Strömungsrichtung (Fig. 3 bis 5).

Die Form der aufgebrachten CS-Indikatoren kann praktisch beliebig sein. Es können Dreiecke, Quadrate usw. gewählt werden. Der kreisförmige Grundriß ist für die Herstellung der Rasterschablonen jedoch am günstigsten. Zur Durchführung des erfindungsgemäßen Verfahrens wird bei Tageslicht (dadurch auch diffuse Filmvorbelichtung) die zu untersuchende, zu beströmende Fläche mit einem handelsüblichen Planfilm, z. B. Agfa N33p® der Agfa Gevaert belegt, auf welchem rasterartig kleine Reagenziendepots mit ca. 0,2 mm³ Rauminhalt aufgetragen werden. Diese vorzugsweise kalottenförmigen Depots enthalten entweder Fällungsmittel für Silber oder Silberverbindungen, oder ein Lösungsmittel für Silberhalogenid. Nach Einwirkung bildgebender Fällungsmittel nämlich schwefelhaltiger $Ag_2S$-Bildner, wie thioorganischer Substanzen oder Sulfane, sowie wasser- und säurelöslicher Sulfide oder Reduktionsmittel für Silberhalogenid wie fotografischen Entwicklern werden tonwertrichtige Bilder erhalten.

Bildgebende Auflösungsagenzien für Silberhalogenide sind Komplexbildner wie z. B. Thiosulfat, wobei das restliche in der Schicht verbleibende Silberhalogenid durch nachfolgende fotografische Entwicklung zum Silberbild entwickelt wird. Das entstandene Halbtonbild ist tonwertinvers.

Die zur Bilderzeugung notwendigen pH-Wert-Stellmittel wie alkalische oder saure Salze, bzw. komplexbildenden Agenzien sind im Strömungsmittel homogen gelöst. Man kann auch umgekehrt verfahren, indem man die pH-Stellmittel und Komplexbildner in rasterförmig aufgetragenen Reagenziendepots auf dem Film aufträgt und das bildgebende Agens in den Reagenziendepots unterbringt und mit neutralem Wasser anströmt.

Hält man die Masse und Konzentration der chemisch wirksamen Komponente der CS-Indikatoren unter Beibehaltung ihrer Geometrie konstant, so ist bei laminarer Strömung die Form der Wirbelschleppe bezüglich ihrer Länge und Breite ein Maß für die Grenzschicht-Strömungsgeschwindigkeit und den Turbulenzgrad. Da Strömungs-Anlaufvorgänge sowohl eine qualitative Auswertung (nach der örtlichen Strömungsrichtung) als auch eine quantitative Auswertung der CSI stören, muß man die Einwirkung dieser Strömungsphase unterbinden.

Das Auftragen der CS-Indikatoren auf den Film kann mit geeigneten Lochrasterschablonen erfolgen. Sie kann mit der gewünschten Rasterkonstante aus PVC-Folien hergestellt werden. Die Bohrungen wurden völlig gradfrei auf einer Hochgeschwindigkeitsbohrmaschine gebohrt. Das Raster für die Verzögerungsschicht wurde in der gleichen Weise hergestellt. Deren Bohrungen weisen einen etwa um den Faktor 1,5 größeren Durchmesser auf, um eine volle Abdeckung des Indikators zu erreichen.

Aus den Figuren ist weiter ersichtlich, daß die Lage von Staupunkt und Wirbelstraßen-Achse sich gegenseitig bedingen. Sie sind immer um 180° gegeneinander versetzt. Hat man die Lage der Wirbelstraßen-Achse, so kennt man den Staupunkt und somit die Richtung der Stromlinie.

Das Verfahren findet vor allem zur flächenmäßigen Erfassung der örtlichen Verteilung der Strömungsrichtung von Strömungsgrenzschichten Verwendung.

Die Erfindung wird anhand der folgenden Beispiele und Figuren näher erläutert.

### Beispiel 1

Darstellung des stationären örtlichen Grenzschicht-Strömungsverlaufs auf der wärmetauschenden, ebenen Fläche einer Wasserkühlkammer für elektronische Baugruppen.

Die zu untersuchende Kühlkammer mit den Maßen 80 × 80 mm wurde auf der wärmetauschenden Fläche mit Agfa-Gevaert Planfilm Typ N33p®, bei Tageslicht belegt. Auf dem Film befanden sich mittels entsprechender Rasterfolie aufgetragene chemische Stromlinien-Indikatoren. Diese bestanden aus: 100 Gew. Teilen Gummiarabikum, 10 Gew. T. Gelatine, 20 Gew. T. Thioharnstoff und Wasser zum Anteigen der Paste. Der Punktdurchmesser betrug 1 mm, die Höhe des Rasterpunktes ca. 100 μm.

Darüber befand sich als Abdeckung eine Verzögerungsschicht, bestehend aus 10 Gew. T. Gummiarabikum, 20 Gew. T. Gelatine und Wasser zum Anteigen der Paste. Die Dicke der Verzögerungsschicht betrug ca. 50 μm.

Das Strömungsmedium Wasser wurde mit 10 Gew.-% Kaliumhydroxyd versetzt. Es wurde bei Zimmertemperatur gearbeitet. Die Strömungsgeschwindigkeit betrug ca. 5 m/sec. Die Aufzeichnungsdauer betrug 3 min. Nach der Aufzeichnung wurde der Film noch fixiert, gewässert und getrocknet.

In Fig. 3 erkennt man in Bildmitte aus der Verbreiterung der Agensschleppen der CS-Indikatoren die Abnahme der Horizontalkomponente der Strömungsgeschwindigkeit in der Strömungsgrenzschicht.

### Beispiel 2

Änderung des örtlichen Grenzschichtströmungsverlaufes einer waagerecht und stationär mit Wasser angeströmten ebenen Platte durch einen quadratischen Störkörper.

In einem Strömungs-Versuchskanal mit ebenem Boden sollte die Änderung der Grenzschichtströmung durch einen quadratischen Störkörper mit den Maßen 15 × 15 × 8 mm untersucht werden.

Als Aufzeichnungsmedium diente ein Agfa Gevaert Planfilm N33p®, welcher bei Tageslicht mittels Siebdrucktechnik mit chemischen Stromlinien-Indikatoren rasterförmig belegt war. Die CS-Indikatoren bestanden aus 100 Gew. T. Gummiarabikum, 10 Gew. T. Gelatine, 20 Gew. T. Kaliumhydroxid und Wasser zum Anteigen der Paste. Der Punktdurchmesser betrug 1 mm und die Punkthöhe ca. 150 μm.

Als Strömungsmedium diente Wasser von Raumtemperatur, in welchem 20 Gew. T. Thioacetamid gelöst war. Die Strömungsgeschwindigkeit betrug ca. 5 m/sec, die Aufzeichnungsdauer 2 min. Nach der Aufzeichnung wurde der Film fixiert, gewässert und getrocknet.

In Fig. 4 erkennt man die stark ausgeprägte Totwasserzone auf der Rückseite des angeströmten Störkörpers daran, daß die punktförmigen Chemikaliendepots fast keine Agensschleppen zeigen.

### Beispiel 3

Änderung des örtlichen stationären Grenzschicht-Strömungsverlaufs einer waagerecht mit Wasser angeströmten ebenen Platte durch einen zylindrischen Störkörper.

Die ebene Fläche eines Strömungsversuchskanals wurde mit einem fotografischen Planfilm Agfa N33p® bei Tageslicht belegt. Der Film war mit einem Punktraster von CS-Indikatoren präpariert, die wie folgt zusammengesetzt waren: 100 Gew. T. Gummiarabikum, 10 Gew. T. Gelatine, 20 Gew. T. Hydrochinon, 20 Gew. T. Natriumhydroxid, 20 Gew. T. Natriumsulfit mit Wasser zum Anteigen der Paste. Der Durchmesser der CS-Indikatoren betrug 1 mm, die Höhe ca. 100 μm.

Diese wurden im Strömungskanal mit neutralem Wasser von Raumtemperatur mit einer Geschwindigkeit von ca. 5 m/sec 3 min lang beströmt. Nach der Aufzeichnung wurde der Film noch fixiert und gewässert.

In Fig. 5 erkennt man im Totwasser des Zylinders deutlich die Strömungsumkehr in der Grenzschicht.

### Beispiel 4

Darstellung des stationären örtlichen Grenzschicht-Strömungsverlaufs auf der wärmetauschenden, ebenen Fläche einer Wasserkühlkammer für Baugruppen.

Die zu untersuchende Kühlkammer mit den Maßen 80 × 80 × 8 mm wurde auf der wärmetauschenden Fläche mit Agfa Gavaert Planfilm, Typ N33p®, bei Tageslicht belegt. Auf dem Film befanden sich mittels entsprechender Rasterfolie aufgetragene, chemische Stromlinien-Indikatoren. Diese bestanden aus: 100 Gew. Teilen Gummiarabikum, 10 Gew. T. Gelatine, 20 Gew. T. Natriumthiosulfat und Wasser zum Anteigen der Paste. Der Punktdurchmesser betrug 1 mm, die Höhe des Rasterpunktes ca. 100 μm.

Darüber befand sich als Abdeckung eine Verzögerungsschicht, bestehend aus 10 Gew. T.

Gummiarabikum, 20 Gew. T. Gelatine und Wasser zum Anteigen der Paste. Der Durchmesser der Verzögerungsschicht betrug 1,5 mm.

Das Strömungsmedium Wasser wurde mit 5 Gew.-% Natriumhydrogensulfit als pH-Stellmittel versetzt. Es wurde bei Zimmertemperatur gearbeitet. Die Strömungsgeschwindigkeit war etwa 5 m/sec, die Aufzeichnung dauerte 3 min. Nach der Exposition wurde der Film noch entwickelt, gewässert und getrocknet. Die Aufzeichnung stellt sich tonwertinvers dar mit hellen Agensschleppen auf dunklem Grund.

**Patentansprüche**

1. Verfahren zur Aufzeichnung von örtlichen Stromlinienrichtungen in einer Grenzschicht zwischen einem flüssigen, wäßrigen Medium und einer an das Medium angrenzenden Fläche, bei welchem die Fläche mit einem Film beschichtet wird, auf welchem rasterartig kleine Reagenziendepots einer wasserlöslichen Substanz aufgebracht werden, wonach eine inerte, im flüssigen Medium lösliche Schicht aufgebracht wird, welche den Kontakt des flüssigen Mediums mit den Reagenziendepots verzögert, und die so vorbereitete Fläche mit dem wäßrigen Strömungsmedium angeströmt wird, dadurch gekennzeichnet,
daß der Film ein trockener oder gequollener, fotografischer Planfilm ist,
daß die Reagenziendepots ca. 0,2 mm$^3$ Rauminhalt haben und aus einer mit Silberionen reagierenden Substanz bestehen
und daß als letzter Verfahrensschritt der Film nach bekannten Verfahren entwickelt wird.

2. Verfahren nach Anspruch 1, dadurch gekennzeichnet, daß die relative Höhe der Reagenziendepots annähernd der halben Grenzschichtdicke entspricht.

3. Verfahren nach Anspruch 1, dadurch gekennzeichnet, daß die Reagenziendepots einen Durchmesser von ca. 1 mm haben.

4. Verfahren nach Anspruch 1 bis 3, dadurch gekennzeichnet, daß die Reagenziendepots kalottenförmig aufgetragen werden.

5. Verfahren nach Anspruch 1 bis 4, dadurch gekennzeichnet, daß die Reagenziendepots Fällungsmittel für Silberionen enthalten.

6. Verfahren nach Anspruch 1 bis 4, dadurch gekennzeichnet, daß die Reagenziendepots ein Lösungsmittel für Silberhalogenide enthalten.

7. Verfahren nach Anspruch 1 bis 6, dadurch gekennzeichnet, daß das Strömungsmedium ein pH-Stellmittel enthält.

8. Verfahren nach Anspruch 1 bis 7, dadurch gekennzeichnet, daß die Reagenziendepots wasserlösliche Bindemittel für die Reagenzien enthalten.

9. Verfahren nach Anspruch 1 bis 8, dadurch gekennzeichnet, daß auf die anzuströmende und mit einem fotografischen Film beschichtete Fläche die Reagenziendepots mittels Siebdrucktechnik aufgetragen werden.

10. Verfahren nach Anspruch 1 bis 8, dadurch gekennzeichnet, daß auf die anzuströmende und mit einem fotografischen Film beschichtete Fläche die Reagenziendepots mit einer Lochrasterschablone als Punktraster aufgetragen werden.

11. Verfahren nach Anspruch 1 bis 10, dadurch gekennzeichnet, daß die Verzögerungsschicht aus einer wasserlöslichen, chemisch nicht reaktiven Deckschicht besteht.

12. Verfahren nach Anspruch 11, dadurch gekennzeichnet, daß die Dicke der Verzögerungsschicht 50 μm beträgt.

13. Verfahren nach Anspruch 1 bis 12, dadurch gekennzeichnet, daß das Strömungsmedium mit Kalilauge bis zu einem pH-Wert von 11—12 eingestellt wird.

14. Anwendung des Verfahrens nach den vorangegangenen Ansprüchen zur flächenmäßigen Darstellung der örtlichen Strömungsrichtung von Strömungsgrenzschichten.

**Claims**

1. A method for recording local streamline directions in a boundary layer between a liquid, aqueous medium and a surface adjoining the medium, wherein the surface is coated with a film on to which small reagent deposits of a water-soluble material are applied in grid fashion, whereupon an inert layer which is soluble in the liquid medium and delays the contact between the liquid medium and the reagent deposits, is applied and the aqueous flowing medium is passed over the surface so prepared, characterized in that the film is a dry or swollen, photographic sheet film; that the reagent deposits have a volume of about 0.2 mm$^3$ and consist of a material which reacts with silver ions; and that, as a final step, the film is developed by known methods.

2. A method as claimed in claim 1, characterized in that the relative height of the reagent deposits corresponds approximately to half the thickness of the boundary layer.

3. A method as claimed in claim 1, characterized in that the reagent deposits have a diameter of about 1 mm.

4. A method as claimed in claim 1 to 3, characterized in that the reagent deposits are applied in calotte form.

5. A method as claimed in claim 1 to 4, characterized in that the reagent deposits contain precipitants for silver ions.

6. A method as claimed in claim 1 to 4, characterized in that the reagent deposits contain a solvent for silver halides.

7. A method as claimed in claim 1 to 6, characterized in that the flow medium contains a pH-adjusting agent.

8. A method as claimed in claim 1 to 7, characterized in that the reagent deposits contain water-soluble bonding agents for the reagents.

9. A method as claimed in claim 1 to 8, characterized in that the reagent deposits are applied on to the surface over which the medium flows and which is coated with a photographic film, by means of a screen printing technique.

10. A method as claimed in claim 1 to 8, characterized in that the reagent deposits are applied on to the surface over which the medium flows and which is coated with a photographic film, as a point grid by means of a perforated grid template.

11. A method as claimed in claim 1 to 10, characterized in that the delaying layer consists of a water-soluble, chemically unreactive covering layer.

12. A method as claimed in claim 1, characterized in that the thickness of the delaying layer is 50 μm.

13. A method as claimed in claim 1 to 12, characterized in that the flow medium is adjusted to a pH-value of 11—12 with potassium hydroxide.

14. The use of the method as claimed in the preceding claims for the areal representation of the local flow direction of flow boundary layers.

## Revendications

1. Procédé d'enregistrement des directions locales des lignes d'écoulements dans une couche-limite entre un milieu liquide, aqueux et une surface adjacente au milieu, qui consiste à revêtir la surface d'un film sur lequel sont déposés suivant une trame de petits dépôts réactifs d'une substance soluble dans l'eau, puis à déposer une couche inerte, soluble dans le milieu liquide, qui retarde le contact du milieu liquide avec les dépôts de réactifs, et à faire affluer le milieu d'écoulement aqueux sur la surface ainsi préparée, caractérisé en ce que le film est un film plan photographique, sec ou gonflé, en ce que les dépôts de réactif ont un volume de 0,2 mm³ environ et sont en une substance qui réagit sur des ions argent et le dernier stade du procédé consiste à développer le film suivant des procédés connus.

2. Procédé suivant la revendication 1, caractérisé en ce que la hauteur relative des dépôts de réactif correspond approximativement à la moitié de l'épaisseur de la couche-limite.

3. Procédé suivant la revendication 1, caractérisé en ce que les dépôts de réactifs ont un diamètre de 1 mm environ.

4. Procédé suivant l'une des revendications 1 à 3, caractérisé en ce que les dépôts de réactifs sont déposés sous forme de calottes.

5. Procédé suivant l'une des revendications 1 à 4, caractérisé en ce que les dépôts de réactifs contiennent des agents de précipitation des ions argent.

6. Procédé suivant l'une des revendications 1 à 4, caractérisé en ce que les dépôts de réactifs contiennent un solvant des halogénures d'argent.

7. Procédé suivant l'une des revendications 1 à 6, caractérisé en ce que le milieu d'écoulement contient un agent de réglage du pH.

8. Procédé suivant l'une des revendications 1 à 7, caractérisé en ce que les dépôts de réactifs contiennent des agents liants hydrosolubles pour les réactifs.

9. Procédé suivant l'une des revendications 1 à 8, caractérisé en ce qu'il consiste à déposer les dépôts de réactifs au moyen d'une technique de sérigraphie sur les surfaces sur lesquelles afflue le milieu et qui sont revêtues d'un film photographique.

10. Procédé suivant l'une des revendications 1 à 8, caractérisé en ce qu'il consiste à déposer les dépôts de réactifs sur les surfaces sur lesquelles afflue le milieu et qui sont revêtues d'un film photographique au moyen d'un gabarit tramé à perforations servant de trame de points.

11. Procédé suivant l'une des revendications 1 à 10, caractérisé en ce que la couche de retardement est constituée d'une couche de recouvrement soluble dans l'eau et non réactive du point de vue chimique.

12. Procédé suivant la revendication 1, caractérisé en ce que l'épaisseur de la couche de retardement est de 50 microns.

13. Procédé suivant l'une des revendications 1 à 12, caractérisé en ce qu'il consiste à régler le pH du milieu d'écoulement jusqu'à une valeur de 11 à 12, par de la lessive de potasse.

14. Utilisation du procédé suivant l'une des revendications précédentes pour la représentation suivant une surface de la direction locale d'écoulement de couches-limites d'écoulement.

FIG 1

FIG 2

FIG 3

FIG 4

FIG 5